(19) Europäisches Patentamt
European Patent Office
Office européen des brevets

(11) **EP 1 529 385 B1**

(12) **EUROPÄISCHE PATENTSCHRIFT**

(45) Veröffentlichungstag und Bekanntmachung des Hinweises auf die Patenterteilung:
**09.01.2008 Patentblatt 2008/02**

(21) Anmeldenummer: 03790721.9

(22) Anmeldetag: **14.08.2003**

(51) Int Cl.:
**H04L 12/56** *(2006.01)*

(86) Internationale Anmeldenummer:
**PCT/DE2003/002737**

(87) Internationale Veröffentlichungsnummer:
**WO 2004/021648 (11.03.2004 Gazette 2004/11)**

(54) **ZUGANGSKONTROLLE BEI PAKETORIENTIERTEN NETZEN**

ACCESS CONTROL FOR PACKET-ORIENTED NETWORKS

CONTROLE D'ACCES DANS DES RESEAUX A COMMUTATION PAR PAQUETS

(84) Benannte Vertragsstaaten:
**DE ES FR GB IT**

(30) Priorität: **14.08.2002 DE 10237333**

(43) Veröffentlichungstag der Anmeldung:
**11.05.2005 Patentblatt 2005/19**

(73) Patentinhaber: **NOKIA SIEMENS NETWORKS GMBH & CO. KG**
**81541 München (DE)**

(72) Erfinder: **MENTH, Michael**
**97255 Gelchsheim/Oellingen (DE)**

(56) Entgegenhaltungen:
**EP-A- 1 168 755        EP-A- 1 227 624**

**Beschreibung**

Die Erfindung betrifft ein Verfahren zur Verkehrsbegrenzung in einem paketorientierten Netz.

Derzeit ist die Entwicklung von Technologien für paketbasierte Netze ein zentrales Betätigungsfeld für Ingenieure aus den Gebieten der Netztechnik, der Vermittlungstechnik und der Internet-Technologien.

Dabei steht das Ziel im Vordergrund, möglichst ein paketorientiertes Netz für beliebige Dienste verwenden zu können. Traditionell werden über paketorientierte Netze zeitunkritische Datenübertragungen vorgenommen, wie z.B. der Transfer von Dateien oder elektronischer Mail. Sprachübertragung mit Echtzeitanforderungen wird traditionell über Telefonnetze mit Hilfe von der Zeitmultiplextechnik abgewickelt. Man spricht in diesem Zusammenhang häufig auch von TDM (time division multiplexing) Netzen. Mit der Verlegung von Netzen mit hoher Bandbreite bzw. Übertragungskapazität ist neben der Daten- und Sprachübertragung auch die Realisierung von Bildbezogenen Diensten in den Bereich des Machbaren gerückt. Übertragung von Videoinformationen in Echtzeit, z.B. im Rahmen von Video-on-demand Diensten oder Videokonferenzen, wird eine wichtige Kategorie von Diensten zukünftiger Netze sein.

Die Entwicklung zielt dahin, möglichst alle Dienste, datenbezogene, sprachbezogene und auf Videoinformationen bezogene, über ein paketorientiertes Netz durchführen zu können. Für die verschiedenen Anforderung bei der Datenübertragung im Rahmen der verschiedenen Dienste definiert man üblicherweise Dienstklassen. Die Übertragung mit einer definierten Dienstqualität (quality of service) vor allem bei Diensten mit Echtzeitanforderungen verlangt eine entsprechende Steuerung bzw. Kontrolle für die Paketübertragung über das Netz. Im Englischen gibt es eine Reihe von Begriffen die sich auf die Kontrolle bzw. Steuerung des Verkehrs beziehen: traffic management, traffic conditioning, traffic shaping, traffic engineering, policing ect. Verschiedene Vorgehensweisen für eine Kontrolle bzw. Steuerung für den Verkehr eines paketorientierten Netzes sind in der einschlägigen Literatur beschrieben.

Bei ATM (asynchroneous transfer mode) Netzen wird für jede Datenübertragung auf der gesamten Übertragungsstrecke eine Reservierung vorgenommen. Durch die Reservierung wird das Verkehrsaufkommen beschränkt. Zur Überwachung findet abschnittsweise eine Überlastkontrolle statt. Eine eventuelle Verwerfung von Paketen wird nach Maßgabe des CLP-Bits (CLP: Cell loss priority) des Paketheaders vorgenommen.

Das Diff-Serv Konzept wird bei IP (internet protocol) Netzen angewendet und zielt auf eine bessere Dienstqualität für Dienste mit hohen Qualitätsanforderungen durch Einführung von Dienstklassen. Ein Solches Konzept wird z.B. in Document EP 1227624 (ALCATEL USA SOURCING LP) 31. Juli. 2002, offenbart. Man spricht in diesem Zusammenhang auch häufig von einem CoS (class of service) Modell. Das Diff-Serv Konzept ist in den von der IETF veröffentlichten RFCs mit den Nummern 2474 und 2475 beschrieben. Im Rahmen des Diff-Serv Konzepts wird mit Hilfe eines DS (Differentiated Services) Feldes im IP Header der Datenpakete durch Setzen des DSCP (DS codepoint) Parameters eine Priorisierung des Paketverkehrs vorgenommen. Diese Priorisierung erfolgt mit Hilfe einer "per hop" Ressourcenallokation, d.h. die Pakete erfahren bei den Knoten je nach der im DS Feld durch den DSCP Parameter festgelegten Dienstklasse (class of service) eine unterschiedliche Behandlung. Die Kontrolle bzw. Steuerung des Verkehrs wird also nach Maßgabe von den Dienstklassen vorgenommen. Das Diff-Serv Konzept führt zu einer privilegierten Behandlung von dem Verkehr priorisierter Dienstklassen, nicht jedoch zu einer zuverlässigen Kontrolle des Verkehrsvolumens.

Ein anderer Ansatz für im Hinblick auf eine quality of service Übertragung über IP Netze ist durch das RSVP (resource reservation protocol) gegeben. Bei diesem Protokoll handelt es sich um ein Reservierungsprotokoll, mit dessen Hilfe eine Bandbreitenreservierung entlang eines Pfades vorgenommen wird. Über diesen Pfad kann dann eine quality of service (QoS) Übertragung stattfinden. Das RSVP Protokoll wird zusammen mit dem MPLS (multi protocol label switching) Protokol eingesetzt, das virtuelle Pfade über IP Netze ermöglicht. Für eine Garantie der QoS Übertragung wird in der Regel entlang des Pfades das Verkehrsaufkommen kontrolliert und gegebenenfalls beschränkt. Durch die Einführung von Pfaden verliert man jedoch viel von der ursprünglichen Flexibilität von IP Netzen.

Zentral für Garantien von Übertragungsqualitätsparametern ist eine effiziente Kontrolle des Verkehrs. Bei einer Kontrolle des Verkehrsaufkommen im Rahmen von Datenübertragung über paketorientierte Netze ist zudem auf eine hohe Flexibilität und geringe Komplexität bei der Datenübertragung zu achten, wie sie z.B. IP Netze in hohem Maße aufweisen. Diese Flexibilität bzw. geringe Komplexität geht bei der Verwendung des RSVP Protokolls mit einer Ende-zu-Ende Pfadreservierung jedoch zu einem großen Teil wieder verloren. Andere Verfahren wie Diff-Serv führen zu keinen garantierten Dienstklassen.

Die Erfindung hat zur Aufgabe, eine effiziente Verkehrskontrolle für ein paketorientiertes Netz anzugeben, das die Nachteile herkömmlicher Verfahren vermeidet.

Die Aufgabe wird durch ein Verfahren zur Verkehrsbegrenzung in einem paketorientierten Netz nach Anspruch 1 gelöst.

Im Rahmen des erfindungsgemäßen Verfahren werden für eine Gruppe von über das Netz zu übertragenden Datenpaketen eines Flows zwei Zulässigkeitsprüfungen durchgeführt. Die erste Zulässigkeitsprüfung wird mit Hilfe eines Grenzwertes für den über den Netzeingangsknoten des Flows geleiteten Verkehr und die zweite mit Hilfe eines Grenzwertes für den über den Netzausgangsknoten des Flow geleiteten Verkehr durchgeführt. Die Übertragung der Gruppe von Datenpaketen wird nicht zugelassen, wenn ein Zulassen der Übertragung zu einem einen der beiden Grenzwerte überschreitenden Verkehrsaufkommen führen würde.

Die beiden Zulässigkeitsprüfungen werden beispielsweise bei dem Netzeingangs- und Netzausgangsknoten des Flows durchgeführt. In diesem Fall wird beispielsweise das Ergebnis bezüglich des über den Netzausgangsknoten geleiteten Verkehrs dem Netzeingangsknoten übermittelt, um dort aufgrund der Ergebnisse beider Zulässigkeitsprüfungen die Übertragung der Gruppe von Datenpaketen zu erlauben oder nicht zu erlauben.

Bei dem paketorientiertem Netz kann es sich auch um ein Teilnetz oder Subnetz handeln. In IP (Internet Protocol) Systemen gibt es z.B. Netzarchitekturen, bei denen das Gesamtnetz in "autonome Systeme" bzw. "autonomous System" genannte Netze unterteilt ist. Das erfindungsgemäße Netz kann z.B. ein autonomes System oder der Teil des Gesamtnetzes im Zuständigkeitsbereich eines Dienstanbieters (z.B. ISP: internet service provider) sein. Im Falle eines Teilnetzes können über eine Verkehrskontrolle in den Teilnetzen und eine effiziente Kommunikation zwischen den Teilnetzen Dienstparameter für eine Übertragung über das Gesamtnetz festgelegt werden.

Der Begriff "Flow" wird üblicherweise verwendet, um den Verkehr zwischen einer Quelle und einem Ziel zu bezeichnen. Hier bezieht sich Flow auf den Eingangsknoten und den Ausgangsknoten des paketorientierten Netzes, d.h. alle Pakete eines Flows im Sinne unseres Sprachgebrauchs werden über den selben Eingangsknoten und denselben Ausgangsknoten übertragen. Die Gruppe von Paketen ist beispielsweise einer Verbindung (bei einer TCP/IP Übertragung definiert durch IP Adresse und Portnummer von Ausgangs- und Zielprozess) und/oder einer Dienstklasse zugeordnet.

Eingangsknoten des paketorientierten Netzes sind Knoten, über die Pakete in das Netz geleitet werden; Ausgangsknoten sind Knoten des Netzes, über die Pakete das Netz verlassen. In der englischsprachigen Literatur spricht man häufig von ingress nodes und egress nodes. Beispielsweise kann ein Netz gegeben sein, das Randknoten und innere Knoten umfasst. Wenn z.B. über alle Randknoten des Netzes Pakete in das Netz gelangen oder das Netz verlassen können, wären in diesem Falle die Randknoten des Netzes sowohl Netzeingangsknoten sowie Netzausgangsknoten.

Ein erfindungsgemäßer Zulässigkeitstest kann durch eine Kontrollinstanz in einem Knoten oder den Knoten vorgeschalteten Rechnern durchgeführt werden. Eine Kontrollinstanz kann dabei für mehrere Knoten Kontrollfunktionen übernehmen.

Durch die erfindunsgemäße Zulässigkeitsprüfung wird das Verkehrsaufkommen innerhalb des Netzes kontrolliert. Bei einer erfindungsgemäßen Behandlung für den gesamten Verkehr, der über das Netz geleitet wird, dass ein Gesamtverkehrsaufkommen erwächst, das zu einer Überlast im Netz und damit zu Verzögerungen und Paketverwerfungen führen würde. Bei bekannter Verkehrsverteilung im Netz können die Grenzen für die Zulässigkeitsprüfungen so gewählt werden, dass auf keiner Teilstrecke Überlastprobleme auftreten.

Die Beschränkung des Verkehrsaufkommen kann im Sinne einer Übertragung mit ausgehandelten Dienstqualitätsmerkmalen (SLA: service level agreements) vorgenommen werden, z.B. nach Maßgabe der Priorisierung des Verkehrs.

Für eine Garantie für Dienste mit QoS Datenübertragung ist es wichtig, das gesamte Verkehrsaufkommen innerhalb des Netzes zu kontrollieren. Dieses Ziel kann erreicht werden, indem für alle Netzeingangsknoten und Netzausgangsknoten Grenzwerte für den über die Knoten geleiteten Verkehr festgesetzt werden. Die Grenzwerte für den über Eingangs- und Ausgangsknoten geleiteten Verkehr können mit Werten für das maximale Verkehrsaufkommen auf Teilstrecken (häufig auch Links genannt) in Zusammenhang gesetzt werden. Der maximale Wert für das Verkehrsaufkommen auf Teilstrecken wird sich dabei im Allgemeinen nicht nur nach der Bandbreite, sondern auch nach der verwendeten Netzwerktechnologie richteh. Z.B. wird in der Regel zu berücksichtigen sein, ob es sich um ein LAN (Local area Network), ein MAN (Metropolitan Area network), ein WAN (Wide Area network) bzw. ein Backbone-Netzwerk handelt. Andere Parameter als die Übertragungskapazität, wie z.B. Verzögerungen bei der Übertragung, müssen z.B. für Netze für Echtzeitanwendungen mitberücksichtigt werden. Beispielsweise ist ein Auslastungsgrad nahe bei 100% für LAN mit CSMA/CD (Carrier Sense Multiple Access (with) Collision Detection) mit Verzögerungen verbunden, die Echtzeit-Anwendungen in der Regel ausschließen. Aus den maximalen Werten für das maximale Verkehrsaufkommen auf Teilstrecken lassen sich dann die Grenzwerte für den über die Eingangs- und Ausgangsknoten geleiteten Verkehr festlegen.

Der Zusammenhang zwischen die Grenzwerte für den über die Eingangs- und Ausgangsknoten geleiteten Verkehr und dem Verkehrsaufkommen auf Teilstrecken des Netzes basiert in der bevorzugten Ausgestaltung auf dem für Paare von Netzeingangsknoten und Netzausgangsknoten anteilsmäßigen Verkehrsaufkommen über die einzelnen Teilstrecken des Netzes. Die für die Paare von Netzeingangsknoten und Netzausgangsknoten anteilsmäßigen Verkehrsaufkommen über die einzelnen Teilstrecken des Netzes können anhand von Erfahrenswerten oder bekannten Eigenschaften von Knoten und Links ermittelt werden. Möglich ist auch, das Netz auszumessen, um diese die anteilsmäßigen Verkehrsaufkommen über die einzelnen Teilstrecken in Abhängigkeit von Netzeingangsknoten und Netzausgangsknoten zu erhalten. In der Verkehrstheorie spricht man in diesem Zusammenhang von der Verkehrsmatrix.

Die Erfindung hat den Vorteil, dass Informationen für die Zugangskontrolle nur bei Eingangs- und Ausgangsknoten vorgehalten werden müssen. Diese Informationen umfassen für einen Eingangsknoten bzw. Ausgangsknoten z.B. die Grenzwerte und aktuellen Werte für den über den jeweiligen Knoten geleiteten Verkehr. Der Umfang der Informationen ist beschränkt. Die Aktualisierung der Information ist wenig aufwändig. Die inneren Knoten brauchen hinsichtlich der Zulässigkeitskontrolle keine Funktionen übernehmen. Das Verfahren ist somit erheblich aufwandsärmer und hat einen niedrigeren Komplexitätsgrad als Verfahren, die für einzelne Teilstrecken Zulässigkeitskontrollen vorsehen. Im Gegensatz zu herkömmlichen Verfahren wie ATM oder MPLS braucht innerhalb des Netzes kein Pfad reserviert zu werden.

ES kann ein Zusammenhang zwischen den Verkehrsaufkommen zwischen Paaren von Netzeingangsknoten und Netzausgangsknoten und dem Verkehrsaufkommen auf Teilstrecken des Netzes hergestellt werden. Mittels der Werte für ein maximales Verkehrsaufkommen auf den Teilstrecken des Netzes können Grenzen für das Verkehrsaufkommen zwischen den Paaren von Netzeingangsknoten und Netzausgangsknoten sowie Grenzwerte für den über die Netzeingangsknoten geleiteten Verkehr und über die Netzausgangsknoten geleiteten Verkehr bestimmt werden.

Der Zusammenhang zwischen den Verkehrsaufkommen zwischen Paaren von Netzeingangsknoten und Netzausgangsknoten und dem Verkehrsaufkommen auf Teilstrecken des Netzes kann als Optimierungsproblem mit Randbedingungen bzw. Nebenbedingungen in Form von Ungleichungen hergestellt werden. Dabei fließt das anteilsmäßige Verkehrsaufkommen über die einzelnen Teilstrecken des Netzes zur Formulierung des Zusammenhangs zwischen den Verkehrsaufkommen zwischen Paaren von Netzeingangsknoten und Netzausgangsknoten und dem Verkehrsaufkommen auf Teilstrecken des Netzes ein.

Diese Formulierung erlaubt zusätzlich, weitere Kriterien in Form von Ungleichungen in die Bestimmung der Grenzen bzw. Grenzwerte für die Zulässigkeitsprüfungen aufzunehmen. Es können z.B. bei der Bestimmung von Grenzen bzw. Grenzwerten für die Zulässigkeitsprüfungen Bedingungen in Form von Ungleichungen aufgenommen werden, die ein geringes Verkehrsaufkommen von hochpriorisierten Verkehr auf Teilstrecken mit größeren Verzögerungszeiten bedingen. Ein anderes Beispiel ist das eines Ausgangsknoten, über den Pakete zu mehreren Eingangsknoten von anderen Netzen übertragen werden können, d.h. der Ausgangsknoten hat Schnittstellen zu mehreren anderen Netzen. Wenn Eingangsknoten eines der nachfolgenden Netze ein geringeres Datenvolumen als der Ausgangsknoten bearbeiten kann, kann durch eine weitere Nebenbedingung in Form einer Ungleichung sicher gestellt werden, dass der über den Ausgangsknoten zu dem Eingangsknoten geleitete Verkehr dessen Kapazität übersteigt.

In einer Variante des erfindungsgemäßen Verfahrens wird zusätzlich eine weitere Zulässigkeitsprüfung vorgesehen, wobei die Zulässigkeitsprüfung mit Hilfe eines Grenzwertes für das Verkehrsaufkommen zwischen dem Netzeingangsknoten und dem Netzausgangsknoten des Flows durchgeführt wird. Die Gruppe von Datenpaketen wird zugelassen, wenn alle drei Prüfungen positiv ausfallen. Zu diesem Zweck kommunizieren die Prüfungsinstanzen miteinander, um mit Hilfe der Ergebnisse der einzelnen Zulässigkeitsprüfungen eine Entscheidung bezüglich der Übertragung der Gruppe von Datenpaketen herbeizuführen.

Entsprechend einer Weiterbindung der Erfindung werden bei Ausfall einer Teilstrecke die Grenzen bzw. Grenzwerte für die Zulässigkeitsprüfung bzw. die Zulässigkeitsprüfungen neu mit der Bedingung festgesetzt werden, dass über die ausgefallene Teilstrecke keine Pakete übertragen werden. Durch die erneute Festsetzung der Grenzen wird erreicht, dass über andere Links der Verkehr geleitet wird, der sonst über den ausgefallenen Link übertragen worden wäre, ohne dass es zu einer Überlast durch den umgeleiteten Verkehr käme. Es kann so flexibel auf Ausfälle reagiert werden.

Ein vorsorglicher Schutz gegen Linkausfälle kann durch die Wahl der Grenzwerte bzw. Grenzen gewährleistet werden. Dabei werden für eine Mehrzahl von möglichen Störfällen jeweils Grenzen bzw. Grenzwerte bestimmt, bei denen das Verkehrsaufkommen auch im Störfall in einem zulässiger Rahmen bleibt, d.h. Parameter wie Laufzeitverzögerung und Paketverlustrate in durch die Qualitätsanforderungen für die Datenübertragung definierten Bereichen bleiben. Die Grenzen bzw. Grenzwerte werden dann auf das Minimum der Werte für die untersuchten Störfälle gesetzt. D.h. jeder der Störfälle ist durch die Wahl der Grenzen bzw. Grenzwerte abgefangen. Die Mehrzahl der Störfälle kann z.B. alle Ausfälle von Links umfassen.

Die genannten Zulässigkeitsprüfungen lassen sich auch in Abhängigkeit der Dienstklasse durchführen. Es ist beispielsweise denkbar, eine niedrig priorisierte Dienstklasse zu haben, bei der man Verzögerungen oder den Verwurf von Paketen in Kauf nimmt, wenn die Auslastung des Netzes hoch ist. Dagegen würden für hoch priorisierten Verkehr die Grenzen so gewählt werden, dass Garantien bezüglich Übertragungsqualitätsparameter übernommen werden können.

Die Erfindung wird im folgenden anhand einer Figur im Rahmen eines Ausführungsbeispiels näher erläutert.

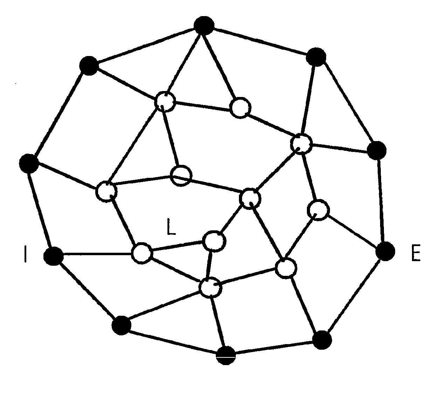

Die Figur zeigt ein erfindungsgemäßes Netz. Randknoten sind durch gefüllte Kreise, innere Knoten durch nicht gefüllte Kreise gekennzeichnet. Links sind durch Verbindungen zwischen den Knoten dargestellt. Exemplarisch ist ein Eingangsknoten mit I, ein Ausgangsknoten mit E und ein Link mit L bezeichnet. Über den Link L wird ein Teil des Verkehrs zwischen den Knoten I und E übertragen. Die Zulässigkeitsprüfungen bei dem Eingangsknoten I und bei dem Ausgangsknoten E stellen zusammen mit den Zulässigkeitsprüfungen bei anderen Randknoten sicher, dass keine Überlast bei dem Link L auftritt.

Im folgenden werden mathematische Zusammenhänge für das erfindungsgemäße Verfahren dargestellt. In der Praxis werden in der Regel Grenzen bzw. Grenzwerte in Abhängigkeit der maximalen Linkkapazitäten festgesetzt.

Ob der einfacheren mathematischen Darstellung wird im folgenden der umgekehrte Fall betrachtet, d.h. in Abhängigkeit der Grenzen bzw. Grenzwerte die Dimensionierung der Links berechnet. Die Lösung des umgekehrten Problems kann dann mit numerischen Methoden erfolgen.

Für die folgende detailliertere Darstellung werden folgende Größen eingeführt:

c(L): das Verkehrsaufkommen auf dem Netzabschnitt (Link) L aV(i,j,L): das anteilsmäßige Verkehrsaufkommen über den Link L des gesamten Verkehrsaufkommens zwischen dem Eingangsknoten i und dem Ausgangsknoten j,
Ingress(i): Der Grenzwert für den Verkehr über den Netzeingangsknoten i,
Egress(j): Der Grenzwert für den Verkehr über den Ausgangsknoten j,
$\delta(i,j)$: Das Verkehrsaufkommen zwischen dem Netzeingangsknoten i und dem Netzausgangsknoten j.

Es lassen sich nun folgende Ungleichungen formulieren:

Für alle i gilt

$$\sum \delta(i,j) \leq Ingress(i), \text{ Summe über alle } j. \quad (1)$$

Für alle j gilt

$$\sum \delta(i,j) \leq Egress(j), \text{ Summe über alle } i. \quad (2)$$

Für alle Links L gilt:

$$c(L) = \sum \delta(i,j) \cdot aV(i,j,L), \text{ Summe über alle } i \text{ und } j. \quad (3)$$

Mit Hilfe des Simplex-Algorithmus können für vorgegebene Werte von Ingress(i) und Egress(j) die maximalen c(L) berechnet werden, die die Ungleichungen (2) bis (4) erfüllen. Anders herum kann für einen Satz Grenzen bzw. Grenzwerte Ingress(i), Egress(j) und BBB(i,j) überprüft werden, ob auf einem Link L eine unzulässig hohe Last auftreten kann. Eine der zu hohen Last entgegenwirkende Änderung der Grenzen bzw. Grenzwerte kann in diesem Fall vorgenommen werden.

Das erfinderische Verfahren lässt auf einfache Weise zu, durch Änderung der Grenzen bzw. Grenzwerte auf Störungen zu reagieren. So kann bei dem Ausfall eines Links L der Zusammenhang diesen Link ausklammern (z.B. durch Nullsetzen aller aV(i,j,L) für diesen Link L). Durch die neue Formulierung des Zusammenhangs können abgeänderte Grenzen bzw. Grenzwerte ermittelt werden, die als Zulässigkeitskriterien Überlast innerhalb des Netzes verhindern.

Für die Ausgestaltung mit einer zusätzlichen Zulässigkeitsprüfungen Zulässigkeitsprüfung mit Hilfe eines Grenzwertes für das Verkehrsaufkommen zwischen Netzeingangsknoten und Netzausgangsknoten des lässt sich folgender mathematischer Zusammenhang formulieren:

Es gelten die obigen Definitionen. Zudem sei

BBB (i,j): die Grenze für das Verkehrsaufkommen zwischen dem Eingangsknoten i und dem Ausgangsknoten j,

Für alle 2-Tupel (i,j) gilt

$$\delta(i,j) \leq BBB(i,j). \quad (4)$$

Es gilt wieder (3). Die Optimierung erfolgt unter den Bedingungen (1), (2) und (4). Neu im Vergleich zu der ersten Formulierung des Problems sind die Bedingungen (4). Da bei der Formulierung des Problems mit den Bedingungen (4) mehr Bedingungen zu erfüllen sind, sind die maximalen Werte für c(L) kleiner oder gleich als bei der Lösung ohne die Bedingungen (4). Die zusätzlichen Bedingungen (4) schränken den Lösungsraum ein und führen bei gleichen Werten für die Ingress(i) und Egress(j) zu kleineren Werten c(L) hinsichtlich der Dimensionierung der Links L. Bei der Umkehrung des Problems führen folglich bei gleichen vorgegebenen Werten für die maximale Kapazität c(L) der Links L die Bedingungen (4) in der Regel zu größeren Werten für die Ingress(i) und Egress(j). Man hat daher mehr Flexibilität bei der Festsetzung der Grenzen, und damit bezüglich der optimalen Auslastung des Netzes.

**Patentansprüche**

1. Verfahren zur Verkehrsbegrenzung in einem paketorientierten Netz mit einer Mehrzahl von Teilstrecken (L), bei dem

   - für eine Gruppe von über das Netz zu übertragenden Datenpaketen eines Flows zwei Zulässigkeitsprüfungen durchgeführt werden,
   - die erste Zulässigkeitsprüfung mit Hilfe eines Grenzwertes (Ingress(i)) für den über den Netzeingangsknoten (I) des Flows geleiteten Verkehr und die zweite mit Hilfe eines Grenzwertes (Egress(j)) für den über den Netzausgangsknoten (E) des Flows geleiteten Verkehr durchgeführt wird, und
   - die Übertragung der Gruppe von Datenpaketen nicht zugelassen wird, wenn ein Zulassen der Übertragung zu einem einen der beiden Grenzwerte (Ingress(i), Egress(j)) überschreitenden Verkehr führen würde.

2. Verfahren nach Anspruch 1,
   **dadurch gekennzeichnet,**

   - **dass** für alle Netzeingangsknoten und Netzausgangsknoten Grenzwerte (Ingress(i), Egress(j)) für den über den jeweiligen Knoten geleiteten Verkehrs festgesetzt werden.

3. Verfahren nach Anspruch 2,
   **dadurch gekennzeichnet,**

   - **dass** ein Zusammenhang zwischen den Grenzwerten (Ingress(i), Egress(j)) für den über Netzeingangsknoten bzw. Netzausgangsknoten geleiteten Verkehr mit dem Verkehrsaufkommen (c(L)) auf Teilstrecken (L) des Netzes hergestellt wird, und
   - **dass** mittels von Werten für ein maximales Verkehrsaufkommen auf den Teilstrecken (L) des Netzes die Grenzwerte (Ingress(i), Egress(j)) für den über die Netzeingangsknoten bzw. Netzausgangsknoten geleiteten Verkehr festgesetzt wird.

4. Verfahren nach Anspruch 3,
   **dadurch gekennzeichnet,**

   - **dass** für Paare ((i,j)) von Netzeingangsknoten und Netzausgangsknoten das anteilsmäßige Verkehrsaufkommen (aV(i,j,L)) über die einzelnen Teilstrecken (L) des Netzes ermittelt wird, und
   - **dass** der Zusammenhang zwischen den Grenzwerten (Ingress(i), Egress(j)) für den über die Netzeingangsknoten bzw. Netzausgangsknoten geleiteten Verkehr mit dem Verkehrsaufkommen (c(L)) auf Teilstrecken (L) des Netzes mit Hilfe der Werte für das anteilsmäßige Verkehrsaufkommen (aV(i,j,L)) über die einzelnen Teilstrecken (L) des Netzes hergestellt wird.

5. Verfahren nach einem der vorhergehenden Ansprüche,
   **dadurch gekennzeichnet,**

   - **dass** ein Zusammenhang zwischen den Verkehrsaufkommen (δ(i,j)) zwischen Paaren von Netzeingangsknoten und Netzausgangsknoten und dem Verkehrsaufkommen (c(L)) auf Teilstrecken (L) des Netzes mit Hilfe von Ungleichungen hergestellt wird,
   - und eine Optimierungsverfahren für das Verkehrsaufkommen (c(L)) auf Teilstrecken (L) des Netzes durchgeführt wird, wobei

     -- die Ungleichungen als Nebenbedingungen für die Optimierung verwendet werden, und
     -- das anteilsmäßige Verkehrsaufkommen (aV(i,j,L)) über die einzelnen Teilstrecken (L) des Netzes zur Formulierung des Zusammenhangs zwischen den Verkehrsaufkommen (δ(i,j)) zwischen Paaren ((i,j)) von Netzeingangsknoten und Netzausgangsknoten und dem Verkehrsaufkommen (c(L)) auf Teilstrecken (L) des Netzes verwendet wird.

**6.** Verfahren nach einem der vorhergehenden Ansprüche,
**dadurch gekennzeichnet,**

- **dass** zusätzlich eine weitere Zulässigkeitsprüfung durchgeführt werden, wobei die Zulässigkeitsprüfung mit Hilfe eines Grenzwertes (BBB(i,j)) für das Verkehrsaufkommen ($\delta$(i,j)) zwischen dem Netzeingangsknoten (I) und dem Netzausgangsknoten (E) des Flows durchgeführt wird.

**7.** Verfahren nach Anspruch 6,
**dadurch gekennzeichnet,**

- **dass** ein Zusammenhang zwischen den Verkehrsaufkommen ($\delta$(i,j)) zwischen Paaren ((i,j)) von Netzeingangsknoten und Netzausgangsknoten und dem Verkehrsaufkommen (c(L)) auf Teilstrecken (L) des Netzes hergestellt wird, und
- **dass** mittels Werten für ein maximales Verkehrsaufkommen auf den Teilstrecken (L) des Netzes Grenzen (BBB(i,j)) für das Verkehrsaufkommen zwischen den Paaren ((i,j)) von Netzeingangsknoten und Netzausgangsknoten sowie Grenzwerte (Ingress(i), Egress(j)) für den über die Netzeingangsknoten geleiteten Verkehr und über die Netzausgangsknoten geleiteten Verkehr festgesetzt werden.

**8.** Verfahren nach einem der vorhergehende Ansprüche,
**dadurch gekennzeichnet,**
**dass** bei Ausfall einer Teilstrecke (L) die Grenzen (BBB(i,j)) bzw. Grenzwerte (Ingress(i), Egress(j)) für die Zulässigkeitsprüfung bzw. die Zulässigkeitsprüfungen neu mit der Bedingung festgesetzt werden, dass über die ausgefallene Teilstrecke (L) keine Pakete übertragen werden.

**9.** Verfahren nach einem der vorhergehenden Ansprüche,
**dadurch gekennzeichnet,**
**dass** für zumindest eine Zulässigkeitsprüfung von der Dienstklasse der Gruppe von Paketen abhängige Grenzen (BBB(i,j)) bzw. Grenzwerte (Ingress(i), Egress(j)) verwendet werden.

**10.** Verfahren nach einem der vorhergehenden Ansprüche,
**dadurch gekennzeichnet,**

- **dass** für eine Mehrzahl von möglichen Störfällen jeweils Grenzen bzw. Grenzwerte bestimmt werden, bei denen das Verkehrsaufkommen auch im Störfall in einem zulässigen Rahmen bleibt, und
- **dass** die Grenzen bzw. Grenzwerte auf das Minimum der Werte für die untersuchten Störfälle gesetzt werden.

**11.** Verfahren nach einem der Ansprüche 5 bis 10,
**dadurch gekennzeichnet,**

- **dass** wenigstens ein weiterer Zusammenhang mit Hilfe einer Ungleichung hergestellt wird, der eine Verkehrsbeschränkung auf eine Teilstrecke (L) des Netzes oder einer von dem Netz wegführenden Teilstrecke (L) ausdrückt, und
- **dass** das Optimierungsverfahren unter dieser weiteren Nebenbedingung durchgeführt wird.

**Claims**

**1.** Method for limiting traffic in a packet-oriented network having a plurality of links (L), wherein

- two validation checks are performed for a group of data packets of a flow that are to be transmitted via the network,
- the first validation check is carried out with the aid of a limit value (Ingress(i)) for the traffic routed via the network ingress node (I) of the flow and the second validation check is carried out with the aid of a limit value (Egress(j)) for the traffic routed via the network egress node (E) of the flow, and
- the transmission of the group of data packets is not allowed if allowing the transmission would result in traffic exceeding one of the two limit values (Ingress(i), Egress (j).

**2.** Method according to claim 1,

**characterised in that**

> - limit values (Ingress(i), Egress(j)) for the traffic routed via the respective node are defined for all network ingress nodes and network egress nodes.

**3.** Method according to claim 2,
**characterised in that**

> - a relationship is established between the limit values (Ingress(i), Egress(j)) for the traffic routed via network ingress nodes and network egress nodes with the traffic volume (c(L)) on links (L) of the network, and
> - the limit values (Ingress(i), Egress(j)) for the traffic routed via the network ingress nodes and network egress nodes are determined using values for a maximum traffic volume on the links (L) of the network.

**4.** Method according to claim 3,
**characterised in that**

> - the proportional traffic volume (aV(i,j,L)) over the individual links (L) of the network is determined for pairs ((i, j)) of network ingress nodes and network egress nodes, and
> - the relationship between the limit values (Ingress(i), Egress(j)) for the traffic routed via the network ingress nodes and network egress nodes with the traffic volume (c(L)) on links (L) of the network is established with the aid of the values for the proportional traffic volume (aV(i,j,L)) over the individual links (L) of the network.

**5.** Method according to one of the preceding claims,
**characterised in that**

> - a relationship between the traffic volumes (δ(i,j)) between pairs of network ingress nodes and network egress nodes and the traffic volume (c(L)) on links (L) of the network is established with the aid of inequations,
> - and an optimisation method is implemented for the traffic volume (c(L)) on links (L) of the network, with

>> -- the inequations being used as secondary conditions for the optimisation, and
>> -- the proportional traffic volume (aV(i,j,L)) over the individual links (L) of the network being used to formulate the relationship between the traffic volumes (δ(i,j)) between pairs ((i,j)) of network ingress nodes and network egress nodes and the traffic volume (c(L)) on links (L) of the network.

**6.** Method according to one of the preceding claims,
**characterised in that**

> - a further validation check is also carried out, wherein the validation check is carried out with the aid of a limit value (BBB(i,j)) for the traffic volume (δ(i,j)) between the network ingress node (I) and the network egress node (E) of the flow.

**7.** Method according to claim 6,
**characterised in that**

> - a relationship is established between the traffic volumes (δ(i,j)) between pairs ((i,j)) of network ingress nodes and network egress nodes and the traffic volume (c(L)) on links (L) of the network, and
> - the values for a maximum traffic volume on the links (L) of the network are used to determine limits (BBB(i,j)) for the traffic volume between the pairs ((i,j)) of network ingress nodes and network egress nodes and limit values (Ingress(i), Egress(j)) for the traffic routed via the network ingress nodes and the traffic routed via the network egress nodes.

**8.** Method according to one of the preceding claims,
**characterised in that**
if a link (L) fails, the limits (BBB(i,j)) or limit values ( Ingress (i), Egress(j)) for the validation check(s) are reset with the condition that no packets will be transmitted over the failed link (L).

**9.** Method according to one of the preceding claims,
**characterised in that**

limits (BBB(i,j)) or limit values (Ingress(i), Egress(j)) that are dependent on the class of service of the group of packets are used for at least one validation check.

10. Method according to one of the preceding claims,
**characterised in that**

- limits or limit values at which the traffic volume remains within permissible bounds even in the event of an incident are determined in each case for a plurality of possible incidents, and
- the limits or limit values are set to the minimum of the values for the incidents under examination.

11. Method according to one of claims 5 to 10,
**characterised in that**

- at least one further relationship is established with the aid of an inequation which expresses a traffic restriction on a link (L) of the network or a link (L) leading away from the network, and
- the optimisation method is implemented subject to this further secondary condition.

**Revendications**

1. Procédé de limitation de trafic dans un réseau orienté paquets comprenant une pluralité de tronçons partiels (L), dans lequel

- deux tests d'admissibilité sont effectués pour un groupe de paquets de données d'un flux à transmettre par le réseau,
- le premier test d'admissibilité est effectué à l'aide d'une valeur limite (Ingress (i)) pour le trafic guidé par le noeud d'entrée de réseau (I) du flux et le second test à l'aide d'une valeur limite (Egress (j)) pour le trafic guidé par le noeud de sortie de réseau (E) du flux, et
- la transmission du groupe de paquets de données n'est pas autorisée lorsqu'une autorisation de la transmission entraînerait un trafic dépassant l'une des deux valeurs limites (Ingress (i), Egress (j)).

2. Procédé selon la revendication 1,
**caractérisé en ce que**

- des valeurs limites (Ingress (i) et Egress (j)) sont fixées pour le trafic guidé par le noeud respectif pour tous les noeuds d'entrée de réseau et noeuds de sortie de réseau.

3. Procédé selon la revendication 2,
**caractérisé en ce que**

- un rapport est établi entre les valeurs limites (Ingress (i), Egress (j)) pour le trafic guidé par le noeud d'entrée de réseau resp. le noeud de sortie de réseau avec le volume de trafic c(L) sur des tronçons partiels (L) du réseau, et
- **en ce que** les valeurs limites (Ingress (i), Egress (j)) pour le trafic guidé par les noeuds d'entrée de réseau resp. noeuds de sortie de réseau sont fixées au moyen de valeurs pour un volume de trafic maximum sur les tronçons partiels (L) du réseau.

4. Procédé selon la revendication 3,
**caractérisé en ce que**

- le volume de trafic (aV(i, j, L)) au prorata passant par les tronçons partiels (L) individuels du réseau est déterminé pour des paires ((i), (j)) de noeuds d'entrée de réseau et de noeuds de sortie de réseau, et
- le rapport entre les valeurs limites (Ingress (i), Egress (j)) pour le trafic guidé par les noeuds d'entrée de réseau resp. noeuds de sortie de réseau avec le volume de trafic (c(L)) sur des tronçons partiels (L) du réseau est établi à l'aide des valeurs pour le volume de trafic au prorata (aV(i, j, L)) passant par les tronçons partiels (L) individuels du réseau.

5. Procédé selon l'une quelconque des revendications précédentes,

**caractérisé en ce que**

- on établit un rapport entre le volume de trafic ($\delta(i, j)$) entre des paires de noeuds d'entrée de réseau et de noeuds de sortie de réseau et le volume de trafic ($c(L)$) sur des tronçons partiels (L) du réseau à l'aide d'inégalités, et

- on met en oeuvre un procédé d'optimisation pour le volume de trafic ($c(L)$) sur des tronçons partiels (L) du réseau,

- - les inégalités étant utilisées comme conditions secondaires pour l'optimisation, et

- le volume de trafic au prorata ($aV(i, j, L)$) passant par les tronçons partiels (L) individuels du réseau étant utilisé pour la formulation du rapport entre le volume de trafic ($\delta(i, j)$) entre des paires (($i, j$)) de noeuds d'entrée de réseau et de noeuds de sortie de réseau et le volume de trafic ($c(L)$) sur des tronçons partiels (L) du réseau.

6. Procédé selon l'une quelconque des revendications précédentes,
   **caractérisé en ce que**

   - on effectue en supplément un autre test d'admissibilité, le test d'admissibilité étant effectué à l'aide d'une valeur limite ($BBB (i, j)$) pour le volume de trafic ($\delta(i, j)$) entre le noeud d'entrée de réseau (I) et le noeud de sortie de réseau (E) du flux.

7. Procédé selon la revendication 6,
   **caractérisé en ce que**

   - on établit un rapport entre le volume de trafic ($\delta(i, j)$) entre des paires (($i, j$)) de noeuds d'entrée de réseau et de noeuds de sortie de réseau et le volume de trafic ($c(L)$) sur des tronçons partiels (L) du réseau, et
   - **en ce que** des limites ($BBB (i,j)$) pour le volume de trafic entre les paires (($i, j$)) de noeuds d'entrée de réseau et de noeuds de sortie de réseau et des valeurs limites (Ingress (i), Egress (j)) pour le trafic guidé par les noeuds d'entrée de réseau et le trafic guidé par les noeuds de sortie de réseau sont fixées au moyen de valeurs pour un volume de trafic maximum sur les tronçons partiels (L) du réseau.

8. Procédé selon l'une quelconque des revendications précédentes,
   **caractérisé en ce que**,
   en cas de défaillance d'un tronçon partiel (L), les limites ($BBB(i, j)$) resp. valeurs limites (Ingress (i), Egress (j)) sont fixées à nouveau pour le test d'admissibilité resp. les tests d'admissibilité avec la condition qu'aucun paquet n'est transmis par le tronçon partiel (L) défaillant.

9. Procédé selon l'une quelconque des revendications précédentes,
   **caractérisé en ce que**
   des limites ($BBB (i, j)$) resp. des valeurs limites (Ingress (i), Egress (j)) dépendantes de la classe de service du groupe de paquets sont utilisées pour au moins un test d'admissibilité.

10. Procédé selon l'une quelconque des revendications précédentes,
    **caractérisé en ce que**

    - pour une pluralité d'incidents possibles, on définit respectivement des limites resp. des valeurs limites pour lesquelles le volume du trafic reste dans un cadre acceptable même en cas d'incident, et
    - **en ce que** les limites resp. valeurs limites sont fixées au minimum des valeurs pour les incidents examinés.

11. Procédé selon l'une quelconque des revendications 5 à 10,
    **caractérisé en ce que**

    - on établit au moins un autre rapport à l'aide d'une inégalité qui exprime une limitation du trafic à un tronçon partiel (L) du réseau ou un tronçon partiel (L) partant du réseau, et
    - **en ce que** le procédé d'optimisation est mis en oeuvre avec cette autre condition secondaire.

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 1227624 A